# EUROPEAN PATENT APPLICATION

(11) **EP 4 611 141 A1**
(43) Date of publication of application: **03.09.2025**
(21) Application number: 24160998.1
(22) Date of filing: 01.03.2024
(51) Int. Cl.: H01M 50/213, H01M 50/284, H01M 50/289, H01M 50/507, H01M 10/643, H01M 50/516, H01M 50/519, H01M 10/6551

(54) **IMPROVED CELL STACK**

(71) Applicant: Polarium Energy Solutions AB, 113 63 Stockholm (SE)
(72) Inventor: HILDING, Kim, 113 63 Stockholm (SE)
(74) Representative: AWA Sweden AB

(57) **Abstract**

A battery cell stack (100) is provided. The battery cell stack comprises a plurality of cylindrical battery cells (110) and a cell holder (120). The cell holder comprises a plurality of cylindrical through-holes (122) having a height smaller than a height of a battery cell. Each of the battery cells is arranged in a respective cylindrical through-hole such that the battery cell protrudes at a first side (124) of the cell holder. The battery cell stack further comprises an electrically insulating layer (130) arranged at a second side (126) of the cell holder, and a printed circuit board, PCB, (140) arranged at a first side (112) of the battery cells and configured to electrically interconnect the battery cells. A first adhesive layer (150) is disposed on the electrically insulating layer such that a second side (114) of each of the battery cells is in contact with the first adhesive layer. A second adhesive layer (160) is provided between and in contact with the PCB and the first side of each of the battery cells. Each of the battery cells is electrically connected to the PCB by wire bonding

## Description

### Technical field

The present disclosure generally relates to the field of batteries, for example lithium-based batteries. In particular, the present disclosure relates to a battery cell stack and a method for assembling a battery cell stack.

### Background

Battery pack production involves a mechanical assembly process in which a plurality of battery cells us arranged in a cell pack. The battery cells are connected in series or parallel to achieve a suitable voltage and/or energy capacity of the cell pack. The individual cells may be interconnected via a printed circuit board, PCB, arranged on top of the cell pack. One type of process to connect or bond the cells to the PCB is wire bonding, where small wires connect the cells in different configurations depending on the application, voltage rating, or the performance to be achieved. During the wire bonding process, ultrasonic vibrations are used which may cause the cells to vibrate or rotate. The wire bonding process also exerts a downward force and an upward force on the cells in order to, respectively, attach the wires and to determine a successful attachment of the wires. To ensure that the wire bonding process is performed properly, the cells must be held in place. This places specific requirements on the arrangement and/or materials used to hold the cells in correct positions. For example, to restrict the upward and the downward movement of the cells, a cell holder in which the cells are arranged may conventionally comprise shoulders which extend above and below each cell.

A known method for securing the cells in correct positions is to fill the entire cell pack with glue, and let the glue harden. However, the hardening of the glue takes a long time, thereby prolonging the manufacturing time of the batteries including the cell pack. Further, while hardening, the glue releases gases which may be unhealthy for humans. Furthermore, when the cell pack is glued together, it is difficult to take the cell pack apart for recycling.

Another solution is to screw the cell pack together. However, accidentally dropping a screw onto the battery cells may result in a short-cut between the cells. This may in turn lead to thermal runaway, outbreaks of fire, or explosions. Thus, reducing the number of screws needed for holding the cells in place may increase safety during assembly of the cell pack.

In order to efficiently and securely produce or assemble a cell pack using wire bonding, there is a need for an improved battery cell stack that fulfills the demands of the process of wire bonding.

### Summary

It is therefore an object of the present invention to overcome at least some of the above-mentioned drawbacks, and to provide an improved battery cell stack and an improved method for producing a battery cell stack.

This and other objects are achieved by means of a battery cell stack, a battery, and a method for assembling a battery cell stack as defined in the appended independent claims. Other embodiments are defined by the dependent claims.

According to a first aspect of the present disclosure, a battery cell stack is provided. The battery cell stack comprises a plurality of cylindrical battery cells. The battery cell stack further comprises a cell holder comprising a plurality of cylindrical through-holes having a height smaller than a height of a battery cell. Each of the battery cells is arranged in a respective cylindrical through-hole such that the battery cell protrudes at a first side of the cell holder. The battery cell stack further comprises an electrically insulating layer arranged at a second side of the cell holder. The battery cell stack further comprises a printed circuit board, PCB, which is arranged at a first side of the battery cells and configured to electrically interconnect the battery cells. The battery cell stack further comprises a first adhesive layer disposed on the electrically insulating layer such that a second side of each of the battery cells is in contact with the first adhesive layer. The battery cell stack further comprises a second adhesive layer provided between and in contact with the PCB and the first side of each of the battery cells. Each of the battery cells is electrically connected to the PCB by wire bonding.

The present disclosure relates to the idea of providing a battery cell stack and a method for assembling a cell stack that may provide facilitated mass production and increased safety and efficiency during production of battery packs. The present disclosure also relates to the idea of providing a battery cell stack that may improve the positioning and fixation of the cells, e.g., during a process for connecting the cells to a PCB. The battery cell stack may be employed in devices where battery cell packs are used and the method for assembling a cell stack may be employed in devices used for manufacturing of battery cell packs.

The battery cell stack may be considered as a structure or an arrangement, comprising a plurality of battery cells and one or more components, that surrounds, supports, or arranges the plurality of battery cells. The battery cell stack may be considered as a structure of layers, wherein the components of the battery cell stack may be arranged or divided in one or more layer. A battery cell stack may be as assembled into a cell pack. In an example, one or more cell stacks or cell packs, an enclosure, a control system, a cooling system, and/or a heating system may be comprised in a battery or battery pack that may be used in different commercial, industrial, or residential applications.

The plurality of cylindrical through-holes comprised in the cell holder may be arranged in a structure having a definite and/or repeatable pattern. The through-holes may be defined or arranged in an XY-plane, wherein the XY-plane is defined by an X-direction and a Y-direction. Each of the through-holes has a height, wherein the height may be defined along a Z-direction perpendicular to the XY-plane. The plurality of through-holes comprised in the cell holder may have the same height. The plurality of through-holes may be aligned next to each other in the XY-plane.

A through-hole may be an opening extending from the first side of the cell holder to the second side of the cell holder. The plurality of cylindrical battery cells and the plurality of cylindrical through-holes may have the same geometrical shape, i.e., cylindrical, but have different sizes or dimensions. The height of the battery cell may be defined as the height of a cylinder, i.e., the perpendicular distance between the two bases or sides of the battery cell. As the battery cell is arranged in a cylindrical through-hole in the cell holder, the height of the battery cell may be defined along the Z-direction. The height of each of the plurality of through-holes is smaller, or shorter, than the height of each of the battery cells. Due to the difference in height between the through-hole and the battery cell arranged or placed in the through-hole, the battery cell may protrude from the through-hole in the cell holder. Each battery cell protrudes at the first side of the cell holder. For example, each battery cell may protrude in a surface region local to or a surface region surrounding the through-hole in which the battery cell is arranged. The number of the plurality of battery cells may correspond to the number of the plurality of through-holes.

The cell holder may be compression molded. For example, the cell holder may be formed by compression molded plastic. The cell holder may be formed by any material suitable for compression molding. The cell holder may be electrically insulating and may prevent heat or fire to spread between adjacent battery cells in the battery cell stack in case of thermal runaway. The cell holder may be formed by any material being electrically insulating. The cell holder may restrict movements of the battery cells, arranged in the through-holes, in the X- and Y-directions.

The electrically insulating layer may be formed by an electrically insulating material. The electrically insulating layer may also be thermally conductive. The electrically insulating layer may extend in the XY-plane. The second side of the cell holder where the electrically insulating layer is arranged or placed may be opposite to the first side of the cell holder.

The printed circuit board, PCB, may extend in the XY-plane. The PCB may have a structure or a design that complies with, or is based on, the structure of the through-holes such that the plurality of battery cells may be connected to the PCB. The PCB may be formed as a sheet.

The first side of each battery cell may correspond to the first side of the battery cells. The first side of the battery cells may be the side of the battery cells which protrude from the first side of the cell holder. The first side of the battery cells may correspond to the first side of the cell holder. The PCB may be arranged on the side where the battery cells protrude from the cell holder. The PCB and the electrically insulating layer may be arranged on opposite sides of the cell holder. The PCB is configured to electrically interconnect the battery cells such that a suitable voltage and/or energy capacity of the battery cell stack may be achieved. Each of the battery cells is electrically connected to the PCB by wire bonding, wherein wires may connect each of the battery cells to the PCB in different configurations depending on application of the battery cell stack.

The first adhesive layer may comprise a thermally conductive adhesive. The first adhesive layer may be disposed, arranged, or placed between the electrically insulating layer and the second side of the battery cells. The second side of each battery cell may correspond to the second side of the battery cells. The second side of the battery cells may correspond to the second side of the cell holder. The first adhesive layer may be arranged such that it is in contact with the electrically insulating layer and the second side of each of the battery cells. The first adhesive layer may attach or connect the electrically insulating layer and the second side of each of the battery cells to each other. The first adhesive layer may extend in the XY-plane. The structure or the design of the first adhesive layer may be based on the structure of the through-holes in the cell holder. The first adhesive layer may have a definite and/or repeatable pattern. The first adhesive layer may attach each of the battery cells to the electrically insulating layer such that the first adhesive layer and the electrically insulating layer may resist an upward force (pull force), i.e., a force in the positive Z-direction, during wire bonding. The first adhesive layer may resist or prevent rotation of each of the battery cells caused by the vibrations during wire bonding.

The second adhesive layer may be arranged or placed between the PCB and the first side of the battery cells. The second adhesive layer may attach or connect the PCB and the first side of each of the battery cells to each other. The second adhesive layer may extend in the XY-plane, for example in the form of a sheet. In an example, the second adhesive layer may be a sheet of double-sided adhesive tape or foil. The structure or the design of the second adhesive layer may be based on the structure or the design of the PCB and/or the structure of the through-holes in the cell holder. The second adhesive layer may have a definite and/or repeatable pattern. The second adhesive layer may attach each of the battery cells to the PCB. The difference in height between the battery cells and the through-holes in the cell holder provides a gap or spacing between the cell holder and the second adhesive layer. This may ensure contact between each of the battery cells, the second adhesive layer and the PCB, while avoiding contact between the second adhesive layer and the cell holder. The second adhesive layer may resist or prevent rotation of each of the battery cells caused by the vibrations during wire bonding.

The height of the through-holes is smaller than the height of the battery cells such that the battery cells protrude from the cell holder. By this, the force applied by a wire bonding machine during wire bonding may be transferred through the battery cell stack onto a bonding table on which the battery cell stack may be arranged. The battery cells may therefore transfer the downward force from the wire bonding machine to the bottom of the battery cells and thus the bonding table without the cell holder taking on the force. By this, the tolerances for the cell holder may be less strict.

In comparison with known solutions in which a cell holder may comprise shoulders which extend above and below each battery cell for positioning in the Z-direction, the cell holder of the battery cell stack according to the first aspect of the present disclosure is not required to position the battery cells along the Z-direction. This is beneficial in that the requirements or tolerances on the cell holder may be less strict. Furthermore, by reducing the number of components comprised in the battery cell stack along the Z-direction, the tolerances and risk of material deflect may be minimized.

The battery cell stack according to the present disclosure may provide improved efficiency and safety during production using wire bonding compared to known solution. For example, the risk of thermal runaway, outbreaks of fire, or explosions may be reduced, and the manufacturing time may be shortened.

According to some embodiments, the height of the cylindrical through-holes may be 0.2-5 mm shorter than the height of the battery cells.

Since the height of the through-holes may be 0.2-5mm shorter than the height of the battery cells, the battery cells may protrude from the through-holes and/or the cell holder 0.2-5 mm. The battery cells may protrude 0.2-5 mm at the first side of the cell holder if the battery cells are aligned with the second side of the cell holder.

By having a difference in height of 0.2-5 mm between the battery cells and the through-holes, it may be ensured that the force applied by a wire bonding machine during wire bonding may be transferred through the battery cell stack onto a bonding table without the cell holder being exposed to the force. The height difference of 0.2-5 mm may also provide a sufficient gap or spacing between the cell holder and the second adhesive layer. Thus, contact between each battery cell, the second adhesive layer and the PCB may be ensured.

According to some embodiments, the electrically insulating layer may comprise a BoPET film.

BoPET (biaxially oriented polyethylene terephthalate) is an electrically insulating material. Further, BoPET has a high tensile strength, making it a suitable material for the cell stack. Moreover, a BoPET film may have surface properties suitable for use in a cell stack. For example, a BoPET film may have low surface friction, allowing a cell stack including a BoPET film as a bottom layer to be easily moved, e.g., by gliding or sliding, for example onto a heat sink or other surface.

BoPET may also be known as mylar. The BoPET film may be formed as a thin plate or sheet.

According to some embodiments, the first adhesive layer may comprise a plurality of adhesive patches disposed on the electrically insulating layer such that each of the adhesive patches may be aligned with and in contact with the second side of a respective battery cell.

The adhesive patches may be arranged in a pattern corresponding to the structure of the through-holes in the cell holder and thereby the battery cells arranged in the through-holes. An adhesive patch may be formed to fit the second side of a respective battery cell. An adhesive patch may have a circular shape. Each of the adhesive patches may be aligned in the XY-plane with the second side of a respective battery cell, such that the adhesive patch may be in contact with the second side of the battery cell in the battery cell stack. In an example, each battery cell in an assembled battery cell stack "stands" on an adhesive patch disposed or provided on the electrically insulating layer. An adhesive patch may comprise a dot or deposit of a fluid or viscous adhesive. Alternatively, an adhesive patch may comprise an adhesive tape of film having the shape of a patch.

The plurality of adhesive patches disposed on the electrically insulating layer may ensure connection with the battery cell without the adhesive patches being in contact with the cell holder. If the first adhesive layer were to stick to the cell holder, and a part of the second side of the cell holder would be uneven, there would be a risk that the electrically insulating layer may stick, via the first adhesive layer, to the uneven second side of the cell holder. By this, a battery cell arranged in the cell holder may be suspended in the air by the uneven electrically insulating layer, and thereby not in contact with a hard, flat bonding table which may cause the battery cell to move during wire bonding. Hence, by providing the first adhesive layer as a layer comprising a plurality of adhesive patches aligned with the battery cells, the risk of the first adhesive layer sticking to the cell holder may be reduced.

According to some embodiments, a diameter of the adhesive patches may be smaller than or equal to a diameter of a battery cell.

The adhesive patches may be circular-shaped, wherein each adhesive patch may have a diameter. Each of the plurality of adhesive patches may have the same diameter. The diameter of each of the plurality of adhesive patches may be smaller than or equal to the diameter of the battery cell. Since the diameter of an adhesive patch may be smaller than or equal to the diameter of the respective battery cell aligned with that adhesive patch, the risk of the first adhesive layer sticking to the cell holder may be further reduced.

According to some embodiments, a diameter of the through-holes in the cell holder may be 0.1-1 mm larger than a diameter of the battery cell.

The diameter of the through-holes may be larger than the diameter of the battery cells such that each battery cell may be easily arranged or placed in the respective through-hole. The larger diameter of the through-holes compared to the battery cells may facilitate the insertion of the battery cells into the through-holes. The diameter difference of 0.3-1 mm may facilitate the insertion of the battery cells while still fixating the battery cells in the XY-plane, i.e., sideways, or laterally.

According to some embodiments, the cylindrical through-holes may comprise guiding elements for centering a battery cell in the through-hole.

Each of the through-holes may comprise one or more guiding elements. The one or more guiding elements may be arranged or placed at a first end of the through-hole and/or at a second end of the through-hole. The first end of the through-hole may be opposite to the second end of the through-hole. The guiding elements may be arranged to protrude or extend towards the center of the through-hole. For example, the guiding elements may be protrusions from the side walls of the through-hole extending toward the center of the through-hole. The guiding elements may be formed by a material corresponding to the material of the cell holder. The guiding elements may be configured to center the battery cell arranged in the through-hole. The guiding elements may be configured to restrict or prevent movement of the battery cell arranged in the through-hole in the X- and Y-directions, i.e., sideways, or laterally.

The guiding elements may comprise a deformable material. Specifically, the guiding elements may be configured to deform upon insertion of a battery cell in the through-hole to further prevent lateral movement of the battery cell.

In an example, the length of the guiding element may correspond to the difference in diameter between the through-hole and the battery cell. For example, the length of the guiding elements may be 0.1-1 mm. Alternatively, a length of a guiding element may be slightly larger, e.g., around 0.1 mm larger, than the difference in diameter between the through-hole and the battery cell. The length of a guiding element may be defined as the distance that the guiding element extends from the side wall of the through-hole towards the center of the through-hole.

The guiding elements may be arranged in the through-holes such that the battery cells may be inserted in the through-holes without difficulty, or, in other words, the guiding elements may assist in inserting the battery cells in the through-holes.

The guiding elements may provide improved positioning and fixation of the battery cells in the XY-plane by restricting movements in the X- and Y-direction, i.e., sideways or laterally. Therefore, the battery cells may be held in place in the X- and Y-directions during wire bonding.

According to some embodiments, the through-holes in the cell holder may form a honeycomb structure.

The plurality of cylindrical through-holes in the cell holder may be arranged in a honeycomb structure. The honeycomb structure may be space efficient. The honeycomb structure may be beneficial for electrically connecting the battery cells to the PCB by wire bonding.

According to some embodiments, a height of the cell holder may be smaller than a height of a battery cell.

The height of the cell holder may be defined along the Z-direction. The height of the cell holder may be smaller than the height of the battery cells such that the battery cells protrude from the cell holder. For example, the battery cell may protrude at a first side of the cell holder. The height of the cell holder may correspond to the height of the through-holes arranged in the cell holder. This may further ensure that during wire bonding, the force from the wire bonding machine may be transferred to the bottom of the battery cells and the wire bonding table, without the cell holder taking on the force. By this, the tolerances for the cell holder may be less strict.

According to some embodiments, the cell holder may comprise an upper cell holder and a lower cell holder together forming the plurality of through-holes. Each cell may be arranged in respective through-holes of the upper and lower cell holder such that the battery cell protrudes above the upper cell holder.

The through-holes of the upper cell holder and the through-holes of the lower cell holder may together form the through-holes of the cell holder. The height of the through-holes of the upper cell holder and the height of the through-holes of the lower cell holder may together be equal to the height of the through-holes of the cell holder. The upper cell holder may be attached or connected to the lower cell holder, and vice versa. The upper cell holder may be detachable from the lower cell holder, and vice versa. The upper cell holder and/or the lower cell holder may be compression molded. The upper cell holder and/or the lower cell holder may be formed by any material being electrically insulating. The upper cell holder may extend in the XY-plane. The lower cell holder may extend in the XY-plane. The structure of the upper through-holes may correspond to the structure of the lower through-holes. The upper cell holder and the lower cell holder may facilitate insertion of the battery cells into the through-holes. Furthermore, an upper cell holder and a lower cell holder may be efficient to manufacture, for example by compression molding.

According to a second aspect of the present disclosure, a battery is provided. The battery comprises a battery cell stack in accordance with the first aspect of the present disclosure.

The battery may comprise one or more assembled battery cell stacks. The battery may comprise one or more components, for example an enclosure or a cover enclosing the battery cell stacks.

According to some embodiments, the battery may further comprise a heatsink arranged in contact with the electrically insulating layer of the battery cell stack.

The heatsink may be configured to conduct heat away from the battery cells of the cell stack. The heat sink may comprise a metal plate, e.g., an aluminum plate, and/or a fluid. Since the second side of each of the battery cells is in contact with the first adhesive layer disposed on the electrically insulating layer, the second side of the battery cell (the minus pole) may be arranged close to the heatsink. Thus, the distance between the battery cell and the heatsink may be dependent on or limited by the thickness, i.e., the height in the Z-direction, of the electrically insulating layer. The electrically insulating layer may have a thickness in the range 0.05-0.3mm, such as 0.1-0.25 mm, or 0.15-0.2mm. The battery comprising one or more battery cell stacks may therefore provide an improved cooling of the battery cells due to the reduced distance between the battery cells and the heatsink. The first adhesive layer and/or the electrically insulating layer may have good thermally conductive properties, to facilitate heat transfer from the cells to the heatsink.

According to a third aspect of the present disclosure, a method for assembling a battery cell stack is provided. The method comprises disposing a first adhesive layer on an electrically insulating layer. The method further comprises arranging a cell holder comprising a plurality of cylindrical through-holes on the electrically insulating layer. The method further comprises arranging each of a plurality of cylindrical battery cells in a respective through-hole of the cell holder such that each battery cell is in contact with the first adhesive layer on the electrically insulating layer. Each of the through-holes has a height smaller than a height of a battery cell such that each battery cell protrudes above the cell holder. The method further comprises arranging a printed circuit board, PCB, configured to electrically interconnect the battery cells, on top of the battery cells, such that a second adhesive layer provided underneath the PCB is in contact with each of the battery cells. The method further comprises wire bonding each of the battery cells to the PCB.

The method for assembling a battery cell stack may be used or applied in any device or process for production of the battery cell stack. For example, the method may in part be performed using a wire bonding machine.

Disposing the first adhesive layer on the electrically insulating layer may comprise providing, placing, or arranging the first adhesive layer onto, or on top of, the electrically insulating layer such that the first adhesive layer and the electrically insulating layer are in contact. The electrically insulating layer may be placed or arranged on a flat surface or a table, such as a wire bonding table. Terms such as on top of, above, below, or underneath may refer to relative positions along the Z-direction. During assembling of the battery cell stack, the flat surface or table on which the electrically insulating layer may be arranged may be defined as the XY-plane. The Z-direction may then be defined as an upward direction perpendicular to the flat surface or the table.

Arranging the cell holder on the electrically insulating layer may comprise arranging the cell holder onto, above or on top of the first adhesive layer. The cell holder may be arranged such that the structure of the through-holes and the structure of the first adhesive layer are aligned or fit each other. Arranging the cell holder on the electrically insulating layer may comprise positioning the cell holder relative the first adhesive layer and/or the electrically insulating layer in the XY-plane, i.e., sideways or laterally.

Arranging each of a plurality of cylindrical battery cells in a respective through-hole of the cell holder may comprise inserting each of the battery cells into a respective through-hole and/or placing or positioning each battery cell in the respective through-hole. Arranging each of a plurality of cylindrical battery cells in a respective through-hole may be performed such that each battery cell is in contact with the first adhesive layer arranged below or underneath the through-holes in the cell holder and each battery cell protrudes above the cell holder. When arranging the battery cells in the through-holes, each of the battery cells may protrude above the cell holder in a surface region local to or a surface region surrounding the through-hole.

Arranging the printed circuit board (PCB) on top of the battery cells may comprise arranging a second adhesive layer between the PCB and the battery cells and/or the through-holes. The second adhesive layer may be arranged or placed underneath or below the PCB. Arranging the printed circuit board, PCB, on top of the battery cells may comprise arranging the PCB with the second adhesive layer on top of the battery cells. The second adhesive layer may be in contact with the PCB and each of the battery cells. Arranging the PCB and the second adhesive layer may comprise positioning the PCB and the second adhesive layer in the XY-plane, i.e., sideways or laterally, for example such that a structure of the PCB may align or fit a structure of the second adhesive layer and/or the structure of the through-holes in the cell holder.

Wire bonding each of the battery cells to the PCB may be performed subsequent to the above-described steps of the method in order for the components of the battery cell stack to be arranged or mounted prior to the wire bonding procedure.

It will be appreciated that any advantages or further explanations provided in more detail in relation to the battery cell stack according to the first aspect of the present disclosure may also apply mutatis mutandis to the method for assembling the assembling the battery cell stack according to the third aspect of the present disclosure. Furthermore, the method for assembling the battery cell stack provides improved efficiency and safety compared to known solutions, e.g., using glue or screws.

According to some embodiments, the disposing a first adhesive layer on the electrically insulating layer may comprise disposing a plurality of adhesive patches on the electrically insulating layer. The cell holder may be arranged on the electrically insulating layer such that each of the adhesive patches is aligned with a respective cylindrical through-hole.

Disposing a plurality of adhesive patches on the electrically insulating layer may comprise, forming, placing, or providing adhesive patches on the electrically insulating layer, for example in a definite and/or repeatable pattern. The adhesive patches may be disposed in a structure or a pattern that complies with or corresponds to the structure of the through-holes in the cell holder. Arranging the cell holder on the electrically insulating layer may comprise aligning the cell holder such that each through-hole is aligned with a respective adhesive patch.

According to some embodiments, the cell holder may comprise an upper cell holder and a lower cell holder together forming the plurality of through-holes. The method may comprise arranging the lower cell holder on the electrically insulating layer. The method may further comprise arranging each of a plurality of cylindrical battery cells in a respective through-hole of the lower cell holder such that each battery cell may be in contact with the first adhesive layer on the electrically insulating layer. The method may further comprise arranging the upper cell holder on top of the lower cell holder, such that each battery cell may be inserted in a respective through-hole of the upper cell holder, and each cell protrudes above the upper cell holder.

Arranging the lower cell holder on the electrically insulating layer may comprise arranging or placing the lower cell holder on top of the first adhesive layer disposed on the electrically insulating layer. The plurality of battery cells may be arranged or placed in the through-holes of the lower cell holder prior to arranging the upper cell holder on top of the lower cell holder. Arranging the upper cell holder on top of or above the lower cell holder may comprise positioning the upper cell holder such that the structure of the through-holes of the upper cell holder and the through-holes in the lower cell holder align with or fit each other. Arranging the upper cell holder on top of the lower cell holder may comprise attaching or connecting the upper cell holder to the lower cell holder. By arranging a lower and upper cell holder to surround the battery cells, the insertion of the battery cells may be facilitated.

It is noted that other embodiments using all possible combinations of features recited in the above-described embodiments may be envisaged. Thus, the present disclosure also relates to all possible combinations of features mentioned herein.

### Brief description of drawings

Exemplifying embodiments will now be described in more detail, with reference to the following appended drawings:
Fig. 1 schematically illustrates an exploded view of a battery cell stack in accordance with some embodiments of the present disclosure.
Fig. 2 schematically illustrates a perspective view of the battery cell stack of Figure 1 in assembled form.
Fig. 3 schematically illustrates a close-up perspective view of top portion of a battery cell stack in accordance with some embodiments of the present disclosure.
Fig. 4 schematically illustrates a cross-sectional view of a battery cell stack in accordance with some embodiments of the present disclosure.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

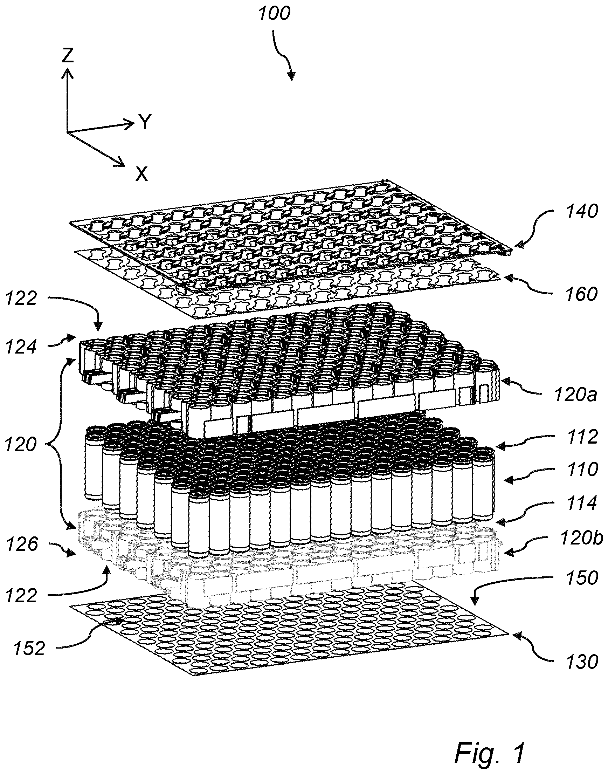

In Fig. 1, an illustration of a battery cell stack 100 according to some embodiments of the present disclosure is shown in exploded view. A three-dimensional coordinate system including an X-axis, a Y-axis and a Z-axis is defined in Fig. 1. The X- and Y-axes span an XY-plane, and the Z-axis is perpendicular to the XY-plane.

The battery cell stack 100 extends along the XY-plane and in the Z-direction. The battery cell stack 100 comprises a plurality of cylindrical battery cells 110. A height of a battery cell may be defined along the Z-direction.

The battery cell stack 100 further comprises a cell holder 120 extending in the XY-plane. The cell holder 120 may comprise an upper cell holder 120a and a lower cell holder 120b as seen in Fig. 1. However, the cell holder 120 may also be formed as a single unit. In the exploded view in Fig. 1, the upper cell holder 120a is illustrated above the plurality of battery cells 110 and the lower cell holder 120b is illustrated below the plurality of battery cells 110. Terms used herein such as "above", "on top of", "below", and "underneath" may refer to a relative position along the Z-axis or Z-direction. The cell holder 120 comprises a plurality of cylindrical through-holes 122. The upper cell holder 120a and the lower cell holder 120b may together form the plurality of through-holes 122.

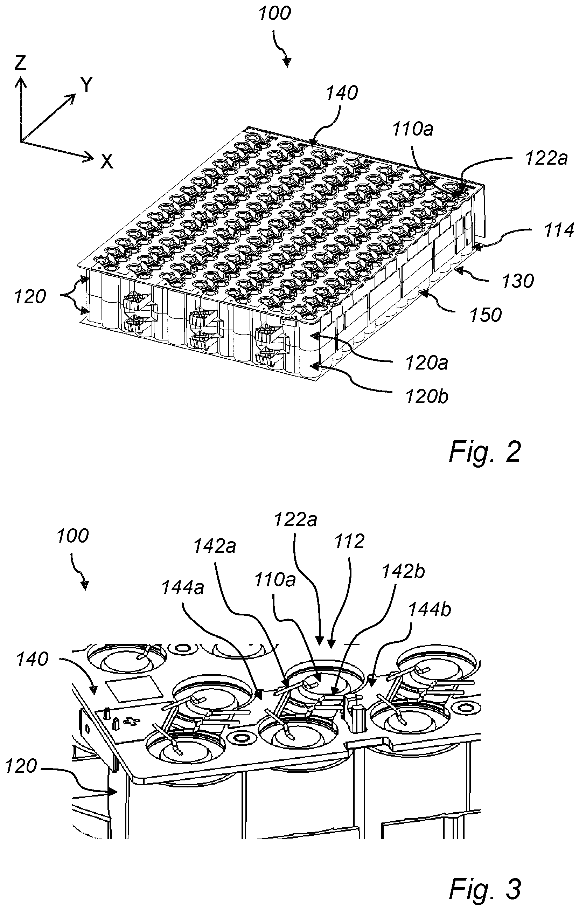

In the assembled cell stack, which is illustrated in Figure 2, each of the battery cells 110 is arranged in a respective through-hole of the plurality of through-holes 122. A height of a through-hole may be defined along the Z-direction. The height of each of the plurality of through-holes 122 is shorter, or smaller, than the height of each of the battery cells 110. By this, each of the battery cells 110 may protrude from a respective through-hole, in which the battery cell is arranged, at a first side 124 of the cell holder 120, i.e., above the cell holder 120, in the assembled cell stack 100. Thus, the battery cells 110 may protrude from the upper cell holder 120a. A height of the cell holder 120 may be defined along the Z-direction. The height of the cell holder 120 may be smaller, or shorter, than the height of each of the battery cells 110.

The through-holes 122 in the cell holder 120 may form a honeycomb structure.

As seen in Fig. 1, the battery cell stack 100 further comprises an electrically insulating layer 130 arranged at a second side 126 of the cell holder 120, i.e., below the cell holder 120. The electrically insulating layer 130 extends in the XY-plane and may be formed as a sheet or plate as shown in Fig. 1. The electrically insulating layer 130 may be formed by any material having electrically insulating properties. For example, the electrically insulating layer 130 may comprise a BoPET film, such as a Mylar, Melinex, Lumirror and Hostaphan film.

The battery cell stack 100 further comprises a printed circuit board, PCB, 140 arranged at a first side 112 of the battery cells 110, i.e., above the battery cells 110. The PCB extends in the XY-plane and may be formed as a sheet or plate as shown in Fig. 1. In the assembled cell stack 100, the battery cells 110 are electrically interconnected by the PCB 140, wherein each of the battery cells 110 is electrically connected to the PCB 140 by wire bonding. As seen in Fig. 1, the PCB 140 may have a structure or pattern that corresponds to or is adapted to the structure of the plurality of through-holes 122 of the cell holder 120. The pattern of the PCB 140 may comprise a plurality of recesses, holes, or gaps. The recesses, holes, or gaps may be formed to align with each of the battery cells 110 arranged in the through-holes 122, as illustrated in Fig. 1.

The battery cell stack 100 further comprises a first adhesive layer 150 disposed on the electrically insulating layer 130. The first adhesive layer 150 extends in the XY-plane and may be formed as a sheet. In the assembled cell stack, a second side 114 of each of the battery cells 110 is in contact with the first adhesive layer 150. As seen in Fig. 1, the first adhesive layer 150 may have a structure or pattern that corresponds to or is adapted to the structure of the plurality of through-holes 122 of the cell holder 120 or the structure of the battery cells 110 when arranged in the through-holes 122. The first adhesive layer 150 may comprise a plurality of adhesive patches 152 and a plurality of recesses, holes, gaps, or negative space, between the patches, as illustrated in Fig. 1. Each of the plurality of adhesive patches 152 may be circular-shaped and aligned with each of the battery cells 110, as shown in Fig. 1, to be in contact with the second side 114 of each of the battery cells in the assembled stack 100. When the battery cell stack 100 is assembled, the first adhesive layer 150 may be configured to connect the battery cells 110 to the electrically insulating layer 130.

The battery cell stack 100 further comprises a second adhesive layer 160 provided between the PCB 140 and the first side 112 of the battery cells 110. The second adhesive layer 160 extends in the XY-plane and may be formed as a sheet. In the assembled cell stack, the first side 112 of each of the battery cells 110 is in contact with the second adhesive layer 160. As shown in Fig. 1, the second adhesive layer 160 may have a structure or pattern that corresponds to or is adapted to the structure of the plurality of through-holes 122 of the cell holder 120 or the structure of the PCB 140. The pattern of the second adhesive layer 160 may comprise a plurality of recesses, holes, or gaps. For example, the plurality of recesses, holes, or gaps may be arranged to align with each of the battery cells 110 arranged in the through-holes 122, as illustrated in Fig. 1. When the battery cell stack 100 is assembled, the second adhesive layer 160 may be configured to connect the battery cells 110 and the PCB 140.

During a wire bonding process, a wire bonding machine uses ultrasonic vibrations to connect each of the battery cells 110 to the PBC 140 with small wires. To ensure that a wire bonding process is performed properly, the battery cells 110 must be held in place, both in the XY-plane and in the Z-direction. The ultrasonic vibration may cause the battery cells 110 to vibrate and/or rotate. The first adhesive layer 150 may resist or prevent such vibrations and/or rotations of each of the battery cells 110. Further, the second adhesive layer 160 connects each of the battery cells 110 to the PCB and may thus resist or prevent vibrations and/or rotations of each of the battery cells 110 during a wire bonding process. The cell holder 120 in which the battery cells 110 are arranged may prevent lateral movement of the battery cells 110 in the XY-plane. However, the cell holder 120 may be configured not to prevent movement of the cell 110 in the Z-direction. The first adhesive layer 150 and the second adhesive layer 160 may also contribute to prevent movement of the battery cells 110 in the XY-plane.

A wire bonding process exerts a downward force, i.e., a force in the negative Z-direction, onto the battery cell stack 100 to attach the wires to the battery cells 110 and the PCB 140. As the height of each of the through-holes 122 is shorter than the height of each of the battery cells 110, the downward force applied onto the battery cell stack 100 may be transferred by the battery cells 110 to the bottom of the battery cells 110 and a surface provided below the battery cell stack 100, such as a wire bonding table. The height difference may therefore provide that the downward force is transferred onto the wire bonding table without the cell holder 120 taking on the force. Thus, the height tolerances for the cell holder 120 may be less strict. Further, the wire bonding process also exerts an upward force, or a pull force, i.e., a force in the positive Z-direction, on the battery cell stack 100 to determine a successful attachment of the wires. The first adhesive layer 150 may attach each of the battery cells 110 to the electrically insulating layer 130 such that the first adhesive layer 150 and the electrically insulating layer 130 may resist the upward force exerted during wire bonding.

With reference to Fig. 1, a method for assembling a battery cell stack 100 according to a third aspect of the present disclosure will be described. The method may comprise a step of arranging an electrically insulating layer on a flat and firm surface, such as a wire bonding table. The method comprises disposing the first adhesive layer 150 on the electrically insulating layer 130. The method may comprise disposing the adhesive layer as a plurality of adhesive patches 152 on the electrically insulating layer 130.

The method further comprises arranging the cell holder 120 comprising the plurality of cylindrical through-holes 122 on the electrically insulating layer 130. Arranging the cell holder 120 on the electrically insulating layer 130 may comprise arranging the cell holder 120 on the first adhesive layer 150 disposed on the electrically insulating layer 130. If the first adhesive layer 150 comprises a plurality of adhesive patches 152, the method may comprise arranging the cell holder 120 on the electrically insulating layer 150 such that each of the adhesive patches 152 is aligned with a respective cylindrical through-hole comprised in the cell holder 120. As seen in Fig. 1, the cell holder 120 may comprise an upper cell holder 120a and a lower cell holder 120b. The method may comprise arranging the lower cell holder 120b on the electrically insulating layer 130, and/or arranging the lower cell holder 120b on the first adhesive layer 150 disposed on the electrically insulating layer 130.

The method further comprises arranging each of a plurality of cylindrical battery cells 110 in a respective through-hole of the cell holder 120 such that each battery cell is in contact with the first adhesive layer 150 on the electrically insulating layer 130. The height of each of the through-holes 122 is smaller than the height of each of the battery cells 110 such that each battery cell protrudes above the cell holder 120. If the cell holder 120 comprises the upper cell holder 120a and the lower cell holder 120b, the method may comprise arranging each of the plurality of cylindrical battery cells 110 in a respective through-hole of the lower cell holder 120b such that each battery cell may be in contact with the first adhesive layer 150 on the electrically insulating layer 130. The method may further comprise arranging the upper cell holder 120a on top of the lower cell holder 120b, such that each battery cell is inserted in a respective through-hole of the upper cell holder 120a, and each cell protrudes above the upper cell holder 120a.

The method may further comprise disposing or providing the second adhesive layer 160 on the PCB 140, such as on a bottom surface of the PCB 140.

The method further comprises arranging the PCB 140 on top of the battery cells 110, i.e., on a first side 112 of the battery cells 110, such that the second adhesive layer 160 provided underneath the PCB 140 is in contact with each of the battery cells 110. The method further comprises wire bonding each of the battery cells 110 to the PCB 140.

Fig. 2 shows an illustration of the battery cell stack 100 in Fig. 1, in assembled form, in perspective view. As seen in Fig. 2 the battery cell stack 100 is illustrated with all components of the battery cell stack 100 assembled. On top of the battery cell stack 100 the PCB 140 is arranged. At the bottom of the battery cell stack 100 the electrically insulating layer 130 is arranged. As shown in Fig. 2, a battery cell 110a of the plurality of battery cells is arranged in a respective through-hole 122a of the plurality of through-holes comprised in the cell holder 120. The upper cell holder 120a is arranged on top of the lower cell holder 120b, thus forming the plurality of through-holes comprised in the cell holder 120. The upper cell holder 120a may be attached to the lower cell holder 120b and vice versa.

The cell stack in assembled form may be arranged in a battery, in accordance with the second aspect of the present disclosure. The battery (not illustrated) comprises a battery cell stack 100 in accordance with a first aspect of the present disclosure, such as the battery cell stack 100 illustrated in Fig. 2. The battery may comprise one or more battery cell stacks. The battery may further comprise a heatsink (not shown) arranged such that the heatsink is in contact with the electrically insulating layer 130 of the battery cell stack 100. For example, the cell stack 100 may be arranged on top of the heatsink. The heatsink may be configured to conduct heat away from the battery cell stack 100. The heatsink may comprise a metal sheet or plate and/or a fluid suitable for conducting heat. Since the second side of the battery cell 110a is arranged is in contact with the first adhesive layer 150 disposed on the electrically insulating layer 130, the second side 114 of the battery cell (the minus pole) may be arranged close to the heatsink. The battery may therefore provide an improved cooling of the battery cell 110a due to the reduced distance between the battery cell 110a and the heatsink. Further, the first adhesive layer 150 and/or the electrically conductive layer 130 may comprise thermally conductive materials, to further improve heat transfer from the cells 110a to the heatsink.

In Fig. 3, a close-up illustration of a top portion of a battery cell stack 100, according to some embodiments of the present disclosure, is shown in perspective view. As seen in Fig. 3, the PCB 140 is arranged at the top of the battery cell stack 100, on the first side 112 of a battery cell 110a of the plurality of battery cells. The battery cell 110a is arranged in a through-hole 122a of the cell holder 120. The battery cell 110a is electrically connected to the PCB 140 by a wire 142a, formed by wire bonding. The wire 142a may be attached at one side to the battery cell 110a, such as at the plus pole of the battery cell 110a, and at the other side to the PCB 140. The PCB 140 may comprise a plurality of electrically conductive regions 144. Each of the battery cells 110 may be connected by a wire 142 to at least one electrically conductive region 144. The battery cell 110a may be connected to the PCB 140 via one or more wires 142a, 142b and in different configurations of the one or more wires. In Figure 3, a positive pole, or plus pole, of the battery cell 110a is connected by a first wire 142a to a first electrically conductive region 144a on the PCB 140. A negative rim of the battery cell 110a is connected by a second wire 142b to a second electrically conductive region 144b of the PCB 140. Each of the plurality of battery cells may be electrically connected to the PCB 140 using one or more wires. By this, the plurality of battery cells may be electrically interconnected in different configurations, such as in series or parallel or a combination thereof, depending on the application of the battery cell stack 100 and/or the voltage rating to be achieved by the battery cell stack 100.

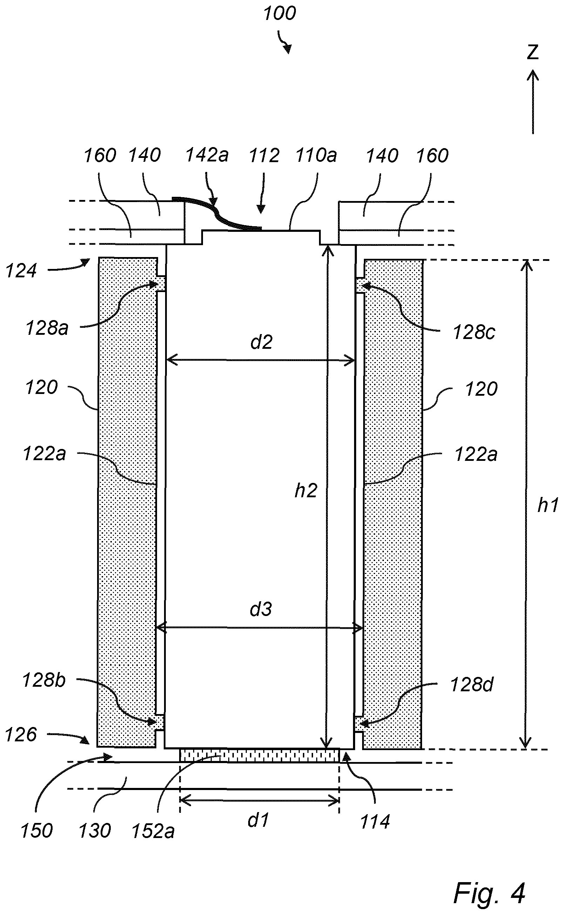

In Fig. 4, a schematic illustration of a close-up cross-section view of a battery cell stack 100 according to some embodiments of the present invention is shown. The battery cell stack 100 illustrated in Fig. 4 may be equivalent to any of the battery cell stacks 100 described above with reference to preceding Figures. Specifically, the battery cell stack 100 shares several features in common with the battery cell stack 100 shown in Fig. 1. Further reference is therefore made to Fig. 1 and the associated text for an increased understanding of these features of the battery cell stack 100. Fig. 4 shows a close-up view of a cylindrical battery cell 110a of the plurality of cylindrical battery cells arranged in a cylindrical through-hole 122a in the cell holder 120.

The Z-direction is defined in Fig. 4. A height h1 of the through-hole 122a and a height h2 of the battery cell 110, both extending in the Z-direction, are marked with double arrows in Fig. 4. As is illustrated in Figure 3, the height h2 may be measured from a bottom surface of the cell 110a, at the second side 114 of the battery cell 110a, to a cell rim at the first side 112 of the battery cell 110a. A cell pole, such as a plus pole, of the battery cell 110a may extend further above the rim of the cell 110a. The height h1 of the through-hole 122a is shorter, or smaller, than the height h2 of the battery cell 110a. The battery cell 110a is arranged in the through-hole 122a such that the battery cell 110a protrudes at the first side 124 of the cell holder 120 due to the difference between the height h1 of the through-hole 122a and the height h2 of the cell 110a.

As seen in Fig. 4, the first side 112 of the battery cell 110 protrudes from the through-hole 122a and thus the cell holder 120. The battery cell 110a may protrude at the first side 124 of the cell holder 120 in a local area surrounding the through-hole 122a in which the battery cell 110a is arranged. In an example, the height h1 of the through-hole 122a may be 0.2-5 mm shorter than the height h2 of the cell 110a. Due to the difference in height, the battery cell 110a may take on and/or transfer a downward force applied onto (from above) the battery cell stack 100 by a wire bonding machine, without the cell holder 120 taking on the force. The battery cell 110a may thus transfer the downward force to the second side 114 of the battery cell 110a and further down to a flat hard/firm surface provided underneath the electrically insulating layer 130, on which the cell stack 100 is arranged.

The electrically insulating layer 130 may be placed or arranged on a flat, hard, or solid, surface, such as a wire bonding table (not shown). The first adhesive layer 150 is arranged/disposed on top of the electrically insulating layer 130.

The first adhesive layer 150 may be a continuous layer. Alternatively, the first adhesive layer 150 may comprise a plurality of adhesive patches disposed on the electrically insulating layer 130. In Fig. 4, an adhesive patch 152a comprised in the first adhesive layer 150 is shown. The adhesive patch 152a is aligned with and in contact with the second side 114 of the battery cell 110a. The battery cell 110a is arranged on top of the adhesive patch 152. The adhesive patch 152a may be circular-shaped. The first adhesive layer 150 may comprise gaps provided between the plurality of adhesive patches. For example, as shown in Fig. 4, the gaps or negative space surrounding the adhesive patch 152a may be comprised in the first adhesive layer 150. A diameter d1 of the adhesive patch 152a and a diameter d2 of the battery cell 110a are marked with double arrows in Fig. 4. As seen in Fig.4, the diameter d1 of the adhesive patch 152a is smaller than the diameter d2 of the battery cell 110a. In embodiments in which the first adhesive layer 150 comprises a plurality of adhesive patches aligned with the plurality of battery cells, the first adhesive layer 130 may stick to each of the cells 110 without sticking to the cell holder 120.

A diameter d3 of the through-hole 122a is marked with a double arrow in Fig. 4. The diameter d3 of the through-hole 122a may be larger than or equal to the diameter d2 of the battery cell 110a. As illustrated in Fig. 4, the diameter d3 of the through-hole 122a is larger than the diameter d2 of the cell 110a. Thus, a gap or space is provided between the battery cell 110a and the through-hole 122a in which the battery cell 110a is arranged. In an example, the diameter d3 may be 0.1-1 mm larger than the diameter d2. Since the diameter d3 of the through-hole 122a is larger than the diameter d2 of the cell 110a, the insertion of the battery cell 110a into the through-hole 122a may be facilitated.

As shown in Fig. 4, a sidewall of the through-hole 122a in the cell holder 120 comprises a plurality of guiding elements, 128a, 128b, 128c, 128d. In Fig. 4, four guiding elements, 128a, 128b, 128c, 128d, for centering the battery cell 110a in the through-hole 122a, are illustrated. The guiding elements, 128a, 128b, 128c, 128d, are illustrated as protrusions extending from a side-wall of the through-hole 122a of the cell holder 120 towards the center of the through-hole 122a. The guiding elements 128a and 128c are arranged near the top of the through-hole 122a and the guiding elements 128b and 128d are arranged near the bottom of the through-hole 122a. The guiding elements, 128a, 128b, 128c, 128d, may be configured to restrict or prevent movement of the battery cell 110a in the X- and Y-directions, i.e., sideways or laterally. In an example, each of the guiding elements, 128a, 128b, 128c, 128d, may protrude from the cell holder 120 into the through-hole 122a by a distance corresponding to the difference between the diameter d3 of the through-hole 122a and the diameter d2 of the battery cell 110a. The guiding elements, 128a, 128b, 128c, 128d, may provide improved positioning and fixation of the battery cell 110a in the XY-plane, while still allowing the battery cell 110a to be inserted in the through-hole 122a without difficulty.

In Fig. 4, the second adhesive layer 160 is arranged at the first side 112 of the battery cell 110a and between the battery cell 110a and the PCB 140. As seen in Fig. 4, the PCB 140, the second adhesive layer 160, and the battery cell 110a are in contact with and/or attached to each other. This may provide improved positioning of the battery cell 110a in the Z-direction and restrict or prevent rotations or vibrations of the battery cell 110a during wire bonding. Specifically, the second adhesive layer 160 is in contact with a rim of the battery cell 110a. The first adhesive layer 150 and the electrically insulating layer 130 may also provide improved positioning of the of the battery cell 110a in the Z-direction and restrict or prevent rotations or vibrations of the battery cell 110a. In Fig. 4, a wire 142a that electrically connects the battery cell 110a to the PCB 140 is illustrated. The wire 142a may be attached to the battery cell 110a and the PCB 140 by wire bonding.

Additionally, variations to the disclosed examples can be understood and effected by the skilled person in practicing the claimed invention, from a study of the drawings, the disclosure, and the appended claims. The mere fact that certain measures are recited in mutually different dependent claims does not indicate that a combination of these measures cannot be used to advantage.

A feature described in relation to one aspect may also be incorporated in other aspects, and the advantage of the feature is applicable to all aspects in which it is incorporated. Other objectives, features, and advantages of the present inventive concept will appear from the detailed disclosure, from the attached claims as well as from the drawings.

Generally, all terms used in the claims are to be interpreted according to their ordinary meaning in the technical field, unless explicitly defined otherwise herein. In the claims, the word "comprising" does not exclude other elements. Further, the use of terms "first", "second", and "third", and the like, herein do not denote any order, quantity, or importance, but rather are used to distinguish one element from another. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

## Claims

1. A battery cell stack (100) comprising:
a plurality of cylindrical battery cells (110);
a cell holder (120) comprising a plurality of cylindrical through-holes (122) having a height (h1) smaller than a height (h2) of a battery cell, wherein each of the battery cells is arranged in a respective cylindrical through-hole such that the battery cell protrudes at a first side (124) of the cell holder;
an electrically insulating layer (130) arranged at a second side (126) of the cell holder;
a printed circuit board, PCB, (140) arranged at a first side (112) of the battery cells and configured to electrically interconnect the battery cells,
a first adhesive layer (150) disposed on the electrically insulating layer such that a second side (114) of each of the battery cells is in contact with the first adhesive layer;
a second adhesive layer (160) provided between and in contact with the PCB and the first side of each of the battery cells,
wherein each of the battery cells is electrically connected to the PCB by wire bonding.

2. The cell stack of any of the preceding claims, wherein the height of the cylindrical through-holes is 0.2-5 mm shorter than the height of the battery cells

3. The cell stack of any of the preceding claims, wherein the electrically insulating layer comprises a BoPET film.

4. The cell stack of any of the preceding claims, wherein the first adhesive layer comprises a plurality of adhesive patches (152) disposed on the electrically insulating layer such that each of the adhesive patches is aligned with and in contact with the second side of a respective battery cell.

5. The cell stack of claim 4, wherein a diameter (d1) of the adhesive patches is smaller than or equal to a diameter (d2) of a battery cell.

6. The cell stack of any of the preceding claims, wherein a diameter (d3) of the through-holes in the cell holder is 0.1-1 mm larger than a diameter (d2) of the battery cell.

7. The cell stack of any of the preceding claims, wherein the cylindrical through-holes comprise guiding elements (128) for centering a battery cell in the through-hole.

8. The cell stack of any of the preceding claims, wherein the through-holes in the cell holder form a honeycomb structure.

9. The cell stack of any of the preceding claims, wherein a height of the cell holder is smaller than a height of a battery cell.

10. The cell stack of any of the preceding claims, wherein:
the cell holder comprises an upper cell holder (120a) and a lower cell holder (120b) together forming the plurality of through-holes; and
wherein each battery cell is arranged in respective through-holes of the upper and lower cell holder such that the battery cell protrudes from the upper cell holder.

11. A battery comprising a battery cell stack in accordance with any of the preceding claims.

12. The battery of claim 11, further comprising a heatsink arranged in contact with the electrically insulating layer of the battery cell stack.

13. A method for assembling a battery cell stack, the method comprising:
disposing a first adhesive layer on an electrically insulating layer;
arranging a cell holder comprising a plurality of cylindrical through-holes on the electrically insulating layer;
arranging each of a plurality of cylindrical battery cells in a respective through-hole of the cell holder such that each battery cell is in contact with the first adhesive layer on the electrically insulating layer, wherein each of the through-holes has a height smaller than a height of a battery cell such that each battery cell protrudes above the cell holder;
arranging a printed circuit board, PCB, configured to electrically interconnect the battery cells, on top of the battery cells, such that a second adhesive layer provided underneath the PCB is in contact with each of the battery cells; and
wire bonding each of the battery cells to the PCB.

14. The method of claim 13, wherein:
said disposing a first adhesive layer on the electrically insulating layer comprises disposing a plurality of adhesive patches on the electrically insulating layer; and
said cell holder is arranged on the electrically insulating layer such that each of the adhesive patches is aligned with a respective cylindrical through-hole.

15. The method of claim 13 or 14, wherein the cell holder comprises an upper cell holder and a lower cell holder together forming the plurality of through-holes; wherein the method comprises:
arranging the lower cell holder on the electrically insulating layer;
arranging each of a plurality of cylindrical battery cells in a respective through-hole of the lower cell holder such that each battery cell is in contact with the first adhesive layer on the electrically insulating layer; and
arranging the upper cell holder on top of the lower cell holder, such that each battery cell is inserted in a respective through-hole of the upper cell holder, and each battery cell protrudes above the upper cell holder.
